# EUROPEAN PATENT APPLICATION

(11) **EP 4 783 667 A1**
(43) Date of publication of application: **29.07.2026**
(21) Application number: 23952524.9
(22) Date of filing: 19.09.2023
(51) Int. Cl.: H04W 36/08

(54) **WIRELESS COMMUNICATION METHOD, TERMINAL DEVICE, AND NETWORK DEVICE**

(71) Applicant: Quectel Wireless Solutions Co., Ltd., Shanghai 201601 (CN)
(72) Inventor: ZHAO, Zheng, Shanghai 201601 (CN)
(74) Representative: Fish & Richardson P.C.
(86) International application number: PCT/CN2023/119719
(87) International publication number: WO 2025/059859

(57) **Abstract**

A method for wireless communication, a terminal device, and a network device are provided. The method includes sending, by a terminal device, first information to a first base station after establishing a connection with the first base station. The connection is established based on a first conditional handover requirement, the first base station is a first primary base station associated with the first conditional handover requirement, and the first information is used to indicate one or more of: whether the terminal device accesses a secondary base station; cell information of a first secondary base station accessed by the terminal device in a case that the terminal device accesses the secondary base station; and the terminal device accessing the first secondary base station within a first duration in the case that the terminal device accesses the secondary base station. Based on the first information, the target primary based station knows whether the connection establishment process subsequently involves the access to the first secondary base station, thereby clarifying its own behaviors and achieving efficient and accurate communication.

## Description

### TECHNICAL FIELD

The present disclosure relates to the field of communication technology, and more specifically to a method for wireless communication, a terminal device, and a network device.

### BACKGROUND

With the development of technology, some communication systems have introduced conditional handover processes. Based on the conditional handover process, a terminal device may autonomously determine a target cell and connect to the target cell. Furthermore, some communication systems have introduced mobility enhancement technologies. The mobility enhancement technology may include a technical solution for conditional handover to a plurality of target cells. After the terminal device performs handover to base stations corresponding to the plurality of target cells, data may be transmitted between the base stations through dual connectivity (DC) channels. Based on these technologies, conditional handover may include various scenarios. The inventors of the present disclosure found that, in a case that the terminal device connects to a target primary base station, the target primary base station is unable to determine which scenario the corresponding conditional handover belongs to, resulting in the target primary base station being unable to clearly define its own behaviors, which in turn leads to communication anomalies or unnecessary operations.

### SUMMARY

The present disclosure provides a method for wireless communication, a terminal device, and a network device. Various aspects related to the present disclosure are described below.

According to a first aspect, a method for wireless communication is provided, including: sending, by a terminal device, first information to a first base station after the terminal device establishes a connection with the first base station; where the connection is established based on a first conditional handover requirement, the first base station is a first primary base station associated with the first conditional handover requirement, and the first information is used to indicate one or more of: whether the terminal device accesses a secondary base station; cell information of a first secondary base station accessed by the terminal device in a case that the terminal device accesses the secondary base station; and the terminal device accessing the first secondary base station within a first duration in the case that the terminal device accesses the secondary base station.

According to a second aspect, a method for wireless communication is provided, including: receiving, by a first base station, first information sent by a terminal device after the terminal device establishes a connection with the first base station; where the connection is established based on a first conditional handover requirement, the first base station is a first primary based station associated with the first conditional handover requirement, and the first information is used to indicate one or more of: whether the terminal device accesses a secondary base station; cell information of a first secondary base station accessed by the terminal device in a case that the terminal device accesses the secondary base station; and the terminal device accessing the first secondary base station within a first duration in the case that the terminal device accessing the secondary base station.

According to a third aspect, a terminal device is provided, including: a sending unit, configured to send first information to a first base station after the terminal device establishes a connection with the first base station; where the connection is established based on a first conditional handover requirement, the first base station is a first primary based station associated with the first conditional handover requirement, and the first information is used to indicate one or more of: whether the terminal device accesses a secondary base station; cell information of a first secondary base station accessed by the terminal device in a case that the terminal device accesses the secondary base station; and the terminal device accessing the first secondary base station within a first duration in the case that the terminal device accesses the secondary base station.

According to a fourth aspect, a network device is provided, where the network device is a first base station and includes: a receiving unit, configured to receive first information sent by a terminal device after the terminal device establishes a connection with the first base station; where the connection is established based on a first conditional handover requirement, the first base station is a first primary based station associated with the first conditional handover requirement, and the first information is used to indicate one or more of: whether the terminal device accesses a secondary base station; cell information of a first secondary base station accessed by the terminal device in a case that the terminal device accesses the secondary base station; and the terminal device accessing the first secondary base station within a first duration in the case that the terminal device accessing the secondary base station.

According to a fifth aspect, a terminal device is provided, including a memory and a processor, where the memory is configured to store one or more computer programs, and the processor is configured to invoke the computer programs in the memory to cause the terminal to perform some or all of the operations in the method according to the first aspect.

According to a sixth aspect, a network device is provided, including a processor, a memory, and a transceiver, where the memory is configured to store one or more computer programs, and the processor is configured to invoke the computer programs in the memory to cause the network device to perform some or all of the operations in the method according to the second aspect.

According to a seventh aspect, a communication system is provided, including the above terminal device and/or network device. In another possible design, the system further includes other devices that interact with the terminal device or network device in the solutions provided in the embodiments of the present disclosure.

According to an eighth aspect, a computer-readable storage medium is provided, storing a computer program, where the computer program causes the terminal device and/or network device to perform some or all of the operations in the methods according to various aspects.

According to a ninth aspect, a computer program product is provided, including a non-transitory computer-readable storage medium that stores a computer program, where the computer program is executable to cause the terminal device and/or network device to perform some or all of the operations in the methods according to various aspects. In some implementations, the computer program product may be a software installation package.

According to a tenth aspect, a chip is provided, including a memory and a processor, where the processor is configured to invoke a computer program from the memory to perform some or all of the operations in the methods according to various aspects.

Based on the first information, the target primary base station knows whether the connection establishment process subsequently involves the access to or monitoring of the first secondary base station, thereby clarifying its own behaviors, and achieving efficient and accurate communication. For example, the target primary base station may prepare for a next operation based on the first information. The next operation may include, for example, one or more of: waiting for the terminal device to access the first secondary base station; if, after waiting for a period of time, the terminal device has not accessed the first secondary base station, the target primary base station taking other measures to ensure data transmission; and directly configuring the secondary base station for the terminal device. The other measures may include reconfiguring other secondary base stations for the terminal device, configuring more cells for carrier transmission (e.g., carrier aggregation) for the terminal device, etc.

### BRIEF DESCRIPTION OF THE DRAWINGS

FIG. 1 is a wireless communication system applied in an embodiment of the present disclosure.
FIG. 2 is a schematic flowchart of conditional handover to a new radio dual connectivity (NR-DC).
FIG. 3A is an example diagram of a target primary base station first satisfying a handover requirement and a target secondary base station then satisfying the handover requirement.
FIG. 3B is an example diagram of a target secondary base station first satisfying a handover requirement and a target primary base station then satisfying the handover requirement.
FIG. 4 is a schematic flowchart of a method for wireless communication according to an embodiment of the present disclosure.
FIG. 5 is an example diagram of a plurality of candidate conditional handover requirements.
FIG. 6 is a schematic structural diagram of a terminal device according to an embodiment of the present disclosure.
FIG. 7 is a schematic structural diagram of a network device according to an embodiment of the present disclosure.
FIG. 8 is a schematic structural diagram of an apparatus for communication according to an embodiment of the present disclosure.

### DETAILED DESCRIPTION OF THE EMBODIMENTS

The following describes the technical solution in the present disclosure in combination with the attached drawings.

### COMMUNICATION SYSTEM

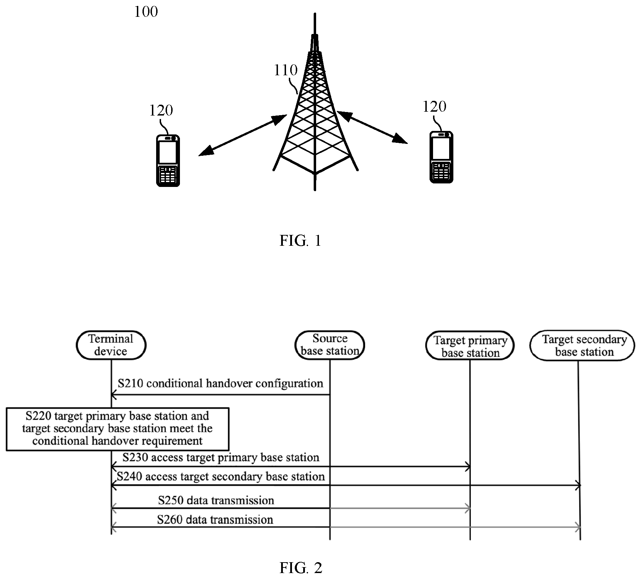

FIG. 1 is a wireless communication system 100 applied in embodiments of the present disclosure. The wireless communication system 100 includes a communication device. The communication device includes a network device 110 and a terminal device 120, and the network device 110 may be a device that communicates with the terminal device 120.

FIG. 1 exemplarily shows a network device and two terminals. Optionally, the wireless communication system 100 may include a plurality of network devices, and the coverage of each network device may include other numbers of terminal devices, which is not limited in the embodiments of the present disclosure.

Optionally, the wireless communication system 100 may further include another network entity such as a network controller, a mobility management entity, etc., which is not limited in the embodiments of the present disclosure.

It should be understood that the technical solutions in the embodiments of the present disclosure may be applied to various communication systems, for example, a 5^{th} generation (5G) or new radio (NR) system, a long term evolution (LTE) system, an LTE frequency division duplex (FDD) system, an LTE time division duplex (TDD) system, and the like. The technical solutions provided in the present disclosure may further be applied to a future communication system such as a sixth-generation mobile communication system, a satellite communication system, or the like.

The terminal device in the embodiments of the present disclosure may also be referred to as user equipment (UE), an access terminal, a subscriber unit, a subscriber station, a mobile station (MS), a mobile terminal (MT), a remote station, a remote terminal, a mobile device, a user terminal, a terminal, a wireless communication device, a user agent, or a user equipment. The terminal device in the embodiments of the present disclosure may be a device that provides voice and/or data connectivity to a user, and may be used to connect a person, an object, and a machine, for example, a handheld device or a vehicle-mounted device having a wireless connection function. The terminal device in the embodiments of the present disclosure may be a mobile phone, a pad, a notebook computer, a palmtop computer, a mobile internet device (MID), a wearable device, a virtual reality (VR) device, an augmented reality (AR) device, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in smart home, etc. Optionally, the UE may serve as a base station. For example, the UE may serve as a scheduling entity that provides a sidelink signal between UEs in vehicle-to-everything (V2X), device-to-device (D2D), or the like. For example, cellular phones and automobiles communicate with each other using sidelink signals. The cellular phone communicates with the smart home device without relaying communication signals through the base station.

The network device in the embodiments of the present disclosure may be a device configured to communicate with the terminal device. The network device may also include an access network device. The access network device provides communication coverage for a particular geographic area and communicates with the terminal device 120 located within the coverage area. The access network device may also be referred to as a radio access network device, a base station, etc. The access network device in the embodiments of the present disclosure may refer to a radio access network (RAN) node (or device) that accesses the terminal device to a wireless network. The access network device may broadly cover various names in the following or be replaced with the following names. For example, a node B (NodeB), an evolved NodeB (eNB), a next generation NodeB (gNB), a relay station, an access point, a transmitting and receiving point (TRP), a transmitting point (TP), a master eNB (MeNB), a secondary eNB (SeNB), a multi-standard radio (MSR) node, a femtocell, a network controller, an access node, a wireless node, an access point (AP), a transmission node, a transceiver node, a base band unit (BBU), a remote radio unit (RRU), an active antenna unit (AAU), a remote radio unit (RRH), a central unit (CU), a distributed unit (DU), a positioning node, and the like. The base station may be a macro base station, a micro base station, a relay node, a donor node or the like, or a combination thereof. The base station may also refer to a communication module, a modem, or a chip for being disposed in the foregoing device or apparatus. The base station may also be a mobile switching center and a device that plays a role of the base station in the D2D, V2X, and machine-to-machine (M2M) communication, a network side device in a 6G network, and a device that plays a role of the base station in a future communication system, etc. The base station supports networks of the same or different access technologies. The specific technology and specific device form adopted by the access network device are not limited in the embodiments of the present disclosure.

The base station may be fixed or mobile. For example, a helicopter or drone may be configured to serve as a mobile base station, and one or more cells move according to the position of the mobile base station. In other examples, a helicopter or drone may be configured to serve as a device in communication with another base station.

The communication device involved in the wireless communication system may include not only the access network device and the terminal device but also a core network element. The core network element may be implemented through a device, meaning that the core network element is a core network device. It should be understood that the core network device may also be a network device.

The core network element in the embodiments of the present disclosure may include an element that processes and forwards signaling and data for users. For example, the core network device may include a core access and mobility management function (AMF), a session management function (SMF), a user plane gateway, a location management function (LMF), and other core network devices. Among them, the user plane gateway may be a server that has functions for managing mobility, routing, and forwarding of user plane data, typically located on a network side, such as a serving gateway (SGW), a packet data network gateway (PGW), or a user plane function (UPF), etc. Of course, the core network may also include other elements, which are not listed here.

In some deployments, the network device in the embodiments of the present disclosure may refer to the CU or the DU, or the network device includes the CU and the DU. The gNB may also include the AAU.

The network device and the terminal device may be deployed on land, including indoor or outdoor, handheld or vehicle-mounted, may be deployed on a water surface, and may also be deployed on an aircraft, a balloon, and a satellite in the air. A scenario in which the network device and the terminal device are located is not limited in the embodiments of the present disclosure.

It should be understood that all or part of functions of the communication device in the present disclosure may also be implemented by a software function running on hardware or implemented by a virtualization function instantiated on a platform (e.g., a cloud platform).

### CONDITIONAL HANDOVER (CHO)

A primary goal of conditional handover is to enhance the reliability and robustness of user handover, addressing issues such as late handover due to prolonged handover preparation time or handover failure caused by a sudden decline in channel quality of a source cell during the handover process.

A core idea of conditional handover is to pre-configure a handover command content for the terminal device in advance. A network device (source base station) corresponding to the source cell may prepare one or more alternative target cells in advance and send the one or more alternative target cells to the terminal device while the wireless signal quality of the source cell has not yet deteriorated. The terminal device may measure the one or more alternative target cells. Upon receiving the configuration for conditional handover, the terminal device may determine whether the alternative target cells meet the requirements for conditional handover based on measurement results of the alternative target cells. When one of the alternative target cells meets the requirements for conditional handover, the terminal device may autonomously execute the configuration in the handover command and directly initiate access to the target cell that meets the requirements.

Since the terminal device does not trigger measurement reporting when the handover conditions are met, and the terminal device has already obtained the configuration in the handover command in advance, the issue of measurement reporting and handover command being unable to be correctly received as mentioned above is addressed. Particularly in highspeed mobility scenarios or in situations where the signal rapidly deteriorates during handover, conditional handover may significantly improve the success rate of handover. Moreover, since the actual execution of the handover is determined by the terminal device based on wireless channel conditions of the target cell, a timing of the handover in conditional handover may better align with the wireless quality experienced by the terminal device.

### MOBILITY ENHANCEMENT

Some communication standards (e.g., 3GPP R18) have introduced mobility enhancement processes. Mobility enhancement includes technical solutions for conditional handover to a plurality of target cells. The plurality of target cells may include one target primary cell and at least one target secondary cell. The target primary cell corresponds to a target primary base station, and the target secondary cell corresponds to a target secondary base station. After the handover, data may be transmitted between the target primary base station and the target secondary base station using a dual connectivity (DC) channel. That is, the conditional handover process may be a process of conditional handover to DC (e.g., NR-DC).

FIG. 2 is a schematic flowchart of conditional handover to NR-DC. The method shown in FIG. 2 includes operations S210 to S260.

At operation S210, the source base station (i.e., a base station corresponding to the source cell) sends a conditional handover configuration to the terminal device.

Similar to common conditional handover, the conditional handover configuration may indicate one or more candidate conditional handover requirements for the terminal to choose from.

The conditional handover configuration may indicate that a target of the conditional handover is to access two target base stations, which include the target primary base station and the target secondary base station. Therefore, the conditional handover requirements may include conditions configured in pairs. For example, the conditional handover requirements may specify that signal strength of the primary base station should meet a first handover requirement, and signal strength of the secondary base station should meet a second handover requirement.

In a case that the terminal device has the capability to support conditional handover to NR-DC, the source base station is able to configure NR-DC conditional handover for the terminal device, regardless of whether the terminal device uses DC in the source cell.

At operation S220, in a case that the terminal device determines that both the primary base station and the secondary base station in a certain conditional handover requirement meet the handover requirement, the terminal device initiates the conditional handover for the primary base station and the secondary base station, i.e., identifying the primary base station and the secondary base station as the target primary base station and the target secondary base station.

The terminal device may measure wireless signal strength of the primary and secondary base stations associated with each conditional handover requirement to determine whether the signal strength of the primary and secondary base stations meets the handover requirement.

If the terminal device initiates a conditional handover process for the target primary base station and the target secondary base station, the terminal device may proceed to operation S230 and operation S240.

At operation S230, the terminal device interacts with the target primary base station through signaling to enable the terminal device to access the target primary base station.

At operation S240, the terminal device interacts with the target secondary base station through signaling to enable the terminal device to access the target secondary base station.

After accessing the two target base stations, the terminal device continues to transmit data through the two target base stations.

At operation S250, data transmission occurs between the terminal device and the target primary base station.

At operation S260, data transmission occurs between the terminal device and the target secondary base station.

As shown in FIG. 2, at operations S250 and S260, gray double arrows indicate the interaction of data.

It should be understood that, from a micro perspective, whether the conditional handover requirements for the two target cells are met or the two target cells are accessed, there is an order involved.

In some embodiments, when the terminal device determines whether the two target cells meet the conditional handover requirements, the access behavior of the terminal device is not affected regardless of whether a condition for the target primary cell is met first or a condition for the target secondary cell is met first. For example, the terminal device may wait until both conditions are met before initiating the handover. That is, when only one condition is met, the terminal device may not initiate the handover behavior.

In some embodiments, during a process of accessing the target cells, the terminal device accesses the two target cells in a specific order. For example, the terminal device may first access the target primary base station and then the target secondary base station.

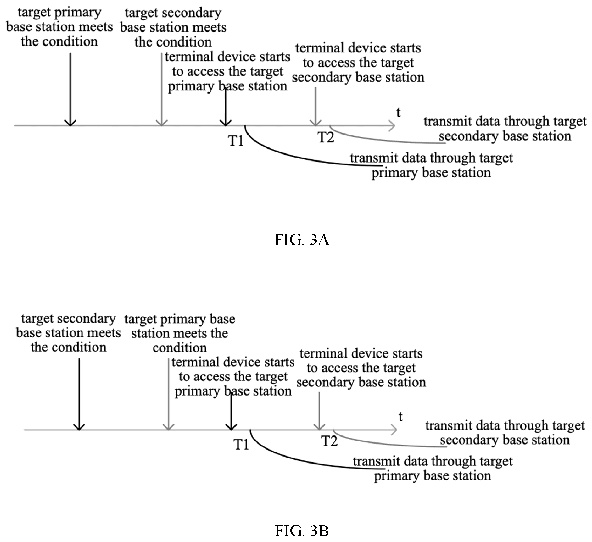

The following illustrates with reference to FIG. 3A and FIG. 3B.

As shown in FIG. 3A, the handover requirement for the target primary cell is met first, and then the handover requirement for the target secondary cell is met. When both the handover requirements for the target primary cell and the target secondary cell are met, the terminal device begins to access corresponding base stations. The terminal device first accesses the target primary base station at time T1. After successfully accessing the target primary base station, the terminal device transmits data through the target primary base station. Subsequently, at time T2, the terminal device accesses the target secondary base station. After successfully accessing the target secondary base station, the terminal device transmits data through the target secondary base station. It should be understood that a time difference between time T1 and time T2 may be short, but there is a sequential order between time T1 and time T2.

As shown in FIG. 3B, the handover requirement for the target secondary cell is met first, and then the handover requirement for the target primary cell is met. When both the condition for the target primary cell and the handover requirement for the target secondary cell are met, the terminal device begins to access corresponding base stations. The terminal device first accesses the target primary base station. After successfully accessing the target primary base station, the terminal device transmits data through the target primary base station. Subsequently, the terminal device accesses the target secondary base station. After successfully accessing the target secondary base station, the terminal device transmits data through the target secondary base station.

It should be noted that FIG. 3A and FIG. 3B are merely illustrative, representing successful access scenarios. Accessing either the target primary base station or the target secondary base station may succeed or fail.

During a period when the terminal device has accessed the target primary base station but has not yet accessed the target secondary base station (e.g., from time T1 to time T2 in FIG. 3A), the target primary base station cannot determine whether the handover executed by the terminal device is the conditional handover to DC. From the perspective of the target primary base station, this handover may fall into one of two scenarios: 1) the handover is an ordinary conditional handover, meaning that the terminal device only performs the handover to a target cell corresponding to the target primary base station, and corresponding conditional handover requirements do not include the handover requirement for the secondary base station, i.e., there is no need to access the target secondary base station; 2) the handover is based on conditional handover requirements that include the handover requirement for the secondary base station (e.g., the conditional handover is for DC), meaning that the terminal device still needs to access the target secondary base station afterward.

The behavior of the target primary base station may differ based on these two scenarios. For example, in scenario 1), the target primary base station may determine whether to configure a secondary base station for the terminal device based on the capacity of the primary base station. For another example, in scenario 2), the target primary base station may wait for a notification from the terminal device or the target secondary base station indicating that "the terminal device has successfully accessed the target secondary base station." The target primary base station may perform other operations if it does not receive this notification after waiting for a certain period.

The above description illustrates that the terminal device initiates access to the target primary base station and the target secondary base station only when both the handover requirements for the primary cell and the secondary cell in the conditional handover requirements are met. To expedite the access of the terminal device, in some embodiments, the terminal device may initiate connection establishment with the target primary base station in advance if determining that the handover requirement for the primary cell is met. In other words, even if the condition for the target secondary cell is not met, the terminal device may still access the target primary base station first.

Whether the handover requirements for the primary base station and secondary base station in the conditional handover requirements are met may not be correlated. Taking the handover requirement including a requirement for a wireless signal as an example, the terminal device is required to determine whether wireless signal conditions for the primary base station and the secondary base station on the target side are met. Since the wireless signals of the primary base station and the secondary base station are independent and not correlated, whether the handover requirements for the primary base station and the secondary base station in the conditional handover requirements are met also lack correlation. Therefore, there may be various combinations of whether the handover conditions for the primary base station and the secondary base station are met. Table 1 exemplarily illustrates different scenarios of whether the handover conditions for the target primary base station and the target secondary base station are met, along with corresponding behaviors of the terminal device.

**Table 1**

| | Whether the handover requirement for the target primary base station is met | Whether the handover requirement for the target secondary base station is met | Behavior of the terminal device |
|---|---|---|---|
| 1 | Met | Met | Perform handover |
| 2 | Met | Not met | First access the target primary base station and then continue to determine whether the condition of the target secondary base station is met |
| 3 | Not met | Met | Not perform handover |
| 4 | Not met | Not met | Not perform handover |

It should be noted that in the case that the terminal device accesses the target primary base station in advance, the capability of the terminal device on which data transmission between the terminal device and the target primary base station is based may be determined according to the target secondary base station. In other words, this technical solution may reserve the communication capability between the target secondary base station and the terminal device.

From the perspective of the target primary base station, in the case that the terminal device accesses the target primary base station in advance, the handover may fall into one of the following three scenarios: 1) the handover is an ordinary conditional handover, meaning that the terminal device only performs the handover to a target cell corresponding to the target primary base station, and corresponding conditional handover requirements do not include the handover requirement for the target secondary base station, i.e., there is no need to access the target secondary base station; 2) the conditional handover requirements corresponding to this handover include the handover requirement for the target secondary base station, e.g., this handover is a DC-based conditional handover, and this handover is triggered by the satisfaction of the handover requirements for both the target primary base station and the target secondary base station, meaning that the terminal device still needs to access the target secondary base station afterward; 3) the conditional handover requirements corresponding to this handover include the handover requirement for the target secondary base station, this handover is triggered solely by the satisfaction of the handover requirement for the target primary base station, and the handover requirement for the target secondary base station has not yet been met, making it unclear whether the terminal device is able to initiate the access process for the target secondary base station afterward.

The behavior of the target primary base station may differ based on these three scenarios. For example, in scenario 1), the target primary base station may determine whether to configure a secondary base station for the terminal device based on its capacity. For another example, in scenario 2), the target primary base station may wait for a notification from the terminal device or the target secondary base station indicating that "the terminal device has successfully accessed the target secondary base station." For yet another example, in scenario 3), the target primary base station may wait for a period to allow the handover condition for the target secondary base station to be satisfied and for the terminal device to access the target secondary base station. During this period, if the terminal device still has not accessed the target secondary base station, the target primary base station may perform other operations.

The inventors of the present disclosure find that in the case that the terminal device accesses the target primary base station, the target primary base station cannot determine which scenario the corresponding conditional handover belongs to, leading to the target primary base station being unable to clarify its own behaviors, which results in communication anomalies or unnecessary operations.

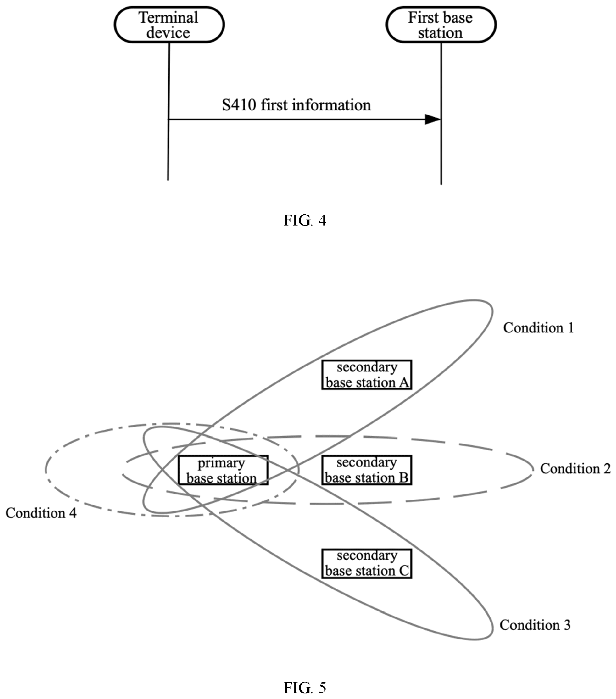

To address the above issues, the present disclosure provides a method for wireless communication. FIG. 4 is a schematic flowchart of the method for wireless communication provided in an embodiment of the present disclosure. The method illustrated in FIG. 4 may be executed by the terminal device and a first base station. The method may include operation S410.

At operation S410, in response to the terminal device triggering an access process for the first base station, the terminal device sends first information to the first base station.

The first base station may be a first primary base station associated with a first conditional handover requirement. In other words, the first base station may be the target primary base station in the conditional handover.

The terminal device may send an access request to the first base station to trigger the access process for the first base station. The access request may be a random access request. In other words, in response to the terminal device sending the access request to the first base station, the terminal device may send the first information to the first base station.

For example, the terminal device may send the first information to the first base station after establishing a connection with the first base station. In other words, in a case that the access process for the first base station is successful, the terminal device may send the first information to the first base station.

In some embodiments, the first information may be used to indicate one or more of: whether the terminal device accesses a secondary base station; information of a first secondary base station accessed by the terminal device in the case that the terminal device accesses the secondary base station; and the terminal device accessing the first secondary base station within a first duration in the case that the terminal device accesses the secondary base station. The first duration may refer to a timing duration of a first timer, which is detailed later and is not elaborated here.

Whether the terminal device accesses the secondary base station may refer to whether, after accessing the first base station, the terminal device monitors a certain secondary base station or a specific cell on a certain secondary base station. The specific cell on the secondary base station may be a primary secondary cell (PSCell) on a configured secondary cell group (SCG). Taking the secondary base station being the first secondary base station as an example, if the first secondary base station meets the handover requirement, the terminal device may access the first secondary base station. If the first secondary base station does not meet the handover requirement, the terminal device does not access the first secondary base station.

Information of the first secondary base station accessed by the terminal device may include: which secondary base station the terminal device is monitoring after accessing the first base station; and/or cell information of the first secondary base station accessed by the terminal device. The cell information of the first secondary base station accessed by the terminal device may indicate which cell the terminal device accesses in the case that the first secondary base station (or the specific cell on the first secondary base station) meets the handover requirement.

The terminal device accessing the first secondary base station within the first duration may include: after accessing the first base station, for how long does the terminal device monitor the first secondary base station. If it is monitored within the first duration that the first secondary base station meets the handover requirement, the terminal device may access the first secondary base station. If it is monitored within the first duration that the first secondary base station does not meet the handover requirement, the terminal device does not continue to monitor the first secondary base station after the first duration.

It should be noted that a starting time of the first duration may be a time when the terminal device sends the first information to the first base station, or a time when the first base station receives the first information.

Optionally, the first information may be explicitly indicated. In other words, the first information may be indicated through one or more fields in a first message.

Optionally, the first information may be implicitly indicated through second information. For example, the second information may be used to indicate the first conditional handover requirement and indirectly indicate the first information through the first handover requirement. The network device may determine one or more of following information based on the first conditional handover requirement associated with this access: whether the terminal device accesses the secondary base station; information of the first secondary base station accessed by the terminal device in a case that the terminal device accesses the secondary base station; and the terminal device accessing the first secondary base station within a first duration in the case that the terminal device accesses the secondary base station. The detailed descriptions of each piece of information may be found in the previous explanation of the first information and are not repeated here. For example, the terminal device may select one of the one or more candidate conditional handover requirements as the first conditional handover requirement. The first conditional handover requirement may include a handover requirement for the first base station.

In some embodiments, the first conditional handover requirement may include a handover requirement for the terminal device accessing the first primary base station. For example, the first conditional handover requirement may solely include the handover requirement for the terminal device accessing the first primary base station. In other words, the first conditional handover requirement is used to achieve the conditional handover targeting only one specific cell as described above. It should be understood that in this case, since the target cell does not include the handover requirement for the terminal device accessing the secondary base station, the first primary base station may also be referred to as the first target base station. That is, in this case, the target base station may be regarded without distinguishing between primary and secondary base stations.

In some embodiments, the first conditional handover requirement may also include handover requirements for the terminal device accessing other base stations besides the first primary base station. Other base stations may include, for example, the first secondary base station. Exemplarily, the first conditional handover requirement may include the handover requirement for the terminal device accessing the first primary base station and the handover requirement for the terminal device accessing the first secondary base station. The first conditional handover requirement may be a conditional handover requirement based on DC handover.

In some embodiments, in the case that the first conditional handover requirement includes the handover requirement for accessing the first secondary base station, the first information may be used to indicate whether the handover requirement for accessing the first secondary base station is met. For example, the first information may indicate whether the handover requirement for accessing the first secondary base station is met at the time of sending the first information, at the time of triggering access to the first base station, or at the time of successfully accessing the base station.

Based on the first information, the target primary base station may know whether the connection establishment process subsequently involves accessing the first secondary base station, thereby clarifying its own behaviors, and achieving efficient and accurate communication. For example, the target primary base station may prepare for a next operation based on the first information. The next operation may include one or more of: waiting for the terminal device to access the first secondary base station; if the terminal device has not accessed the first secondary base station after a certain period, the target primary base station taking other measures to ensure data transmission; directly configuring a secondary base station for the terminal device; and the terminal device indicating the first indication information to the first secondary base station after accessing the first secondary base station. Other measures may include one or more of: reconfiguring other secondary base stations for the terminal device, configuring another cell on the secondary base station associated with the first conditional handover requirement as the PSCell for the terminal device, and configuring other cells for multi-carrier transmission (e.g., carrier aggregation) for the terminal device, etc. The first indication information may include one or more of: context information of the terminal device, relevant information about the data bearer undertaken by the first secondary base station, security keys, etc.

In some embodiments, the first conditional handover requirement may belong to the one or more candidate conditional handover requirements. The one or more candidate conditional handover requirements may form a conditional handover list. The first information may indicate which of the one or more candidate conditional handover requirements the terminal device has selected.

The following example is illustrated in conjunction with FIG. 5. As shown in FIG. 5, there is one primary base station and three possible secondary base stations on the target side, and the candidate conditional handover requirements may include Conditions 1 to 4. In FIG. 5, Conditions 1 to 4 are represented by ellipses of different linearity.

Condition 1 includes: a handover requirement for the primary base station and a handover requirement for a secondary base station A on the target side.

Condition 2 includes: the handover requirement for the primary base station and a handover requirement for a secondary base station B on the target side.

Condition 3 includes: the handover requirement for the primary base station and a handover requirement for a secondary base station C on the target side.

Condition 4 includes: the handover requirement for the target primary base station.

Data rates that secondary base stations A, B, and C support may vary. For data that cannot be handled by the secondary base stations, the primary base station may handle it. Therefore, under different combinations of conditions, the amount of data that the terminal device needs to carry after accessing the target primary base station may vary, and the corresponding capability allocation for the terminal device may also differ. This is also why conditional handover requirements need to be configured as conditions in pairs.

The terminal device may determine which of Conditions 1 to 4 is met. When a certain condition is met, the terminal device may perform a corresponding access behavior. For example, if Condition 1 is met, the terminal device may access the primary base station and secondary base station A on the target side; if the handover requirement for the primary base station in Condition 1 is met but the handover requirement for the secondary base station A is not met, the terminal device may first access the primary base station; if Condition 2 is met, the terminal device may access the primary base station and secondary base station B on the target side; if the handover requirement for the primary base station in Condition 2 is met but the handover requirement for the secondary base station B is not met, the terminal device may first access the primary base station; if Condition 3 is met, the terminal device may access the primary base station and secondary base station C on the target side; if the handover requirement for the primary base station in Condition 3 is met but the handover requirement for the secondary base station C is not met, the terminal device may first access the primary base station; and if Condition 4 is met, the terminal device may access the primary base station on the target side without accessing the secondary base station.

The first base station may serve as the primary base station in FIG. 5. For four conditions illustrated in FIG. 5, if the primary base station receives an access request from the terminal device, in the relevant technology, the primary base station cannot determine which of the four conditions the terminal device triggers the access based on. However, for these four conditions, subsequent processing behaviors of the terminal device and the primary base station (i.e., the target primary base station) may be as shown in Table 2.

**Table 2**

| Identifier | Condition | Subsequent behavior of terminal device | Behavior of primary base station |
|---|---|---|---|
| 1 | The terminal device accesses based on Condition 1. The terminal device determines that the condition of the primary base station is met, and the wireless condition of secondary base station A is met. | Immediately access secondary base station A. | Wait for a notification from secondary base station A or the terminal device indicating "successfully accessing secondary base station A." |
| 2 | The terminal device accesses based on Condition 1. The terminal device determines that the wireless condition of the primary base station is met, but the wireless condition of secondary base station A is not met. | Monitor (or listen to) whether the wireless condition of secondary base station A is met. Once met, and if the target primary base station has not updated the configuration, access secondary base station A. | Wait for a period of time T_A to receive a notification from secondary base station A or the terminal device indicating "successfully accessing secondary base station A." If T_A ends and the terminal device still has not accessed secondary base station A, then reconfigure the secondary base station. |
| 3 | The terminal device accesses based on Condition 2. The terminal device determines that the wireless condition of the primary base station is met, and the wireless condition of secondary base station B is met. | Immediately access secondary base station B. | Wait for a notification from secondary base station B or the terminal device indicating "successfully accessing secondary base station B." |
| 4 | The terminal device accesses based on Condition 2. The terminal device determines that the wireless condition of the primary base station is met, but the wireless condition of secondary base station B is not met. | Monitor whether the wireless condition of secondary base station B is met. Once met, and if the target primary base station has not updated the configuration, access secondary base station B. | Wait for a period of time T_B to receive a notification from secondary base station B or the terminal device indicating "successfully accessing secondary base station B." If T_B ends and the terminal device still has not accessed secondary base station B, then reconfigure the secondary base station. |
| 5 | The terminal device accesses based on Condition 3. The terminal device determines that the wireless condition of the primary base station is met, and the wireless condition of secondary base station C is met. | Immediately access secondary base station C. | Wait for a notification from secondary base station C or the terminal device indicating "successfully accessing secondary base station C." |
| 6 | The terminal device accesses based on Condition 3. The terminal device determines that the wireless condition of the primary base station is met, but the wireless condition of secondary base station C is not met. | Monitor whether the wireless condition of secondary base station C is met. Once met, and if the target primary base station has not updated the configuration, access secondary base station C. | Wait for a period of time T_C to receive a notification from secondary base station C or the terminal device indicating "successfully accessing secondary base station C." If T_C ends and the terminal device still has not accessed secondary base station C, then reconfigure the secondary base station. |
| 7 | The terminal device accesses based on Condition 4. | None | Determine whether to configure other secondary base stations for the terminal device based on the capacity of the primary base station. |

Based on the first information, the first base station may know which of the seven situations the terminal device's access belongs to, thereby taking corresponding measures. For example, in the case where the first information is not transmitted in the relevant technology, for Situation 1, it is unnecessary for the first base station to immediately reconfigure a new secondary cell for the terminal device. Therefore, the present disclosure may avoid some unnecessary behaviors. For another example, for Situation 2, based on the first information, the first base station may wait for a period of time T_A and then determine whether to reconfigure a new secondary base station for the terminal device based on whether the terminal device has accessed secondary base station A, or alternatively select a new PSCell on the original secondary base station and notify the terminal device to access the new PSCell. If the terminal device has accessed secondary base station A within T_A, the first base station does not need to configure a new secondary base station for the terminal device. If the terminal device still has not accessed secondary base station A after T_A ends, the first base station may configure a new secondary base station for the terminal device.

Optionally, one or more candidate conditional handover requirements may be indicated or configured by a second base station through fifth information, and the second base station may be a base station corresponding to the source cell of the terminal device. In other words, the terminal device may obtain the one or more candidate conditional handover requirements from the source base station.

Taking the first conditional handover requirement among the one or more candidate conditional handover requirements as an example, the following explains how the fifth information indicates one of the one or more candidate conditional handover requirements. It should be understood that each of the one or more candidate conditional handover requirements may be indicated in a similar manner.

In some implementations, the fifth information may indicate one or more of following information of the first conditional handover requirement: the handover requirement for the terminal device accessing the first primary base station; whether the handover requirement for accessing the first secondary base station is included; the handover requirement for the terminal device accessing the first secondary base station; the first timer; and the identifier of the first conditional handover requirement. Each of these is explained in detail below.

The handover requirement for the terminal device accessing the first primary base station may be represented by a first signal quality threshold. When the terminal device monitors that wireless signal quality of the first primary base station is greater than or equal to the first signal quality threshold, the handover requirement for the first primary base station is met.

Whether the first conditional handover requirement includes the handover requirement for accessing the first secondary base station may be explicitly indicated or implicitly indicated. For example, explicit indication may be achieved through a Boolean variable. For another example, implicit indication may be made by whether the handover requirement for accessing the first secondary base station is configured. Exemplarily, if the handover requirement for accessing the first secondary base station is configured, it may indicate that the first conditional handover requirement includes the handover requirement for accessing the first secondary base station; and if the handover requirement for accessing the first secondary base station is not configured, it may indicate that the first conditional handover requirement does not include the handover requirement for accessing the first secondary base station.

The handover requirement for the terminal device accessing the first secondary base station may be represented by a second signal quality threshold. When the terminal device monitors that wireless signal quality of the first secondary base station is greater than or equal to the second signal quality threshold, the handover requirement for the first secondary base station is met.

The first timer is related to the time when the terminal device monitors the first secondary base station. The duration of the first timer may be the first duration mentioned above. The fifth information may configure the timing duration of the first timer. Taking Table 2 as an example, for secondary base station A, the timing duration of the first timer may be T_A; for secondary base station B, the timing duration of the first timer may be T_B; and for secondary base station C, the timing duration of the first timer may be T_C.

It should be noted that the first timer may be configured not only by the second base station. In some embodiments, the first timer may be configured by the protocol.

For example, in the case that the handover requirement for the first primary base station is met but the handover requirement for the first secondary base station is not met, the terminal device may start the first timer. Exemplarily, the first timer may be started in response to the following events: the terminal device triggering the access process to the first primary base station, or the terminal device successfully accessing the first primary base station.

During the operation of the first timer, the terminal device may monitor the first secondary base station. The monitored content may include, for example, parameters related to the conditional handover requirements. Parameters related to the conditional handover requirements may include wireless signal quality or strength. Wireless signal quality or strength may be represented by one or more of: reference signal received power (RSRP), reference signal received quality (RSRQ), received signal strength indicator (RSSI), etc.

During the operation of the first timer, if the handover requirement for the first secondary base station is met, the terminal device may initiate access to the first secondary base station. In response to the terminal device initiating access to the first secondary base station or successfully accessing the first secondary base station, the terminal device may stop the first timer. In a case that the first timer expires, the terminal device may stop monitoring the PSCell configured on the first secondary base station and/or may refrain from initiating access to the PSCell configured on the first secondary base station.

Taking Condition 1 shown in FIG. 5 as an example, the fifth information may configure the duration of the first timer to be T_A. When the terminal device determines that the wireless condition of the first primary base station meets the handover requirement in Condition 1, but the wireless condition of secondary base station A does not meet the handover requirement in Condition 1, the terminal device may initiate random access to the primary base station based on Condition 1 and then start the first timer (the timer may be started at the beginning of random access or upon successful random access). During the operation of the first timer, the terminal device monitors whether the wireless condition of secondary base station A is met, and if met, initiates access or connection to secondary base station A. After the timer expires, the terminal device stops monitoring the wireless condition of secondary base station A and refrains from initiating access or connection to secondary base station A.

An identifier of the first conditional handover requirement may be used to indicate which of the one or more candidate conditional handover requirements the first conditional handover requirement is. In other words, the identifier of the first conditional handover requirement may be used to distinguish the first conditional handover requirement from other conditional handover requirements. The identifier of the first conditional handover requirement may be explicitly indicated. For example, the fifth information may include an information field for the identifier of the first conditional handover requirement. The identifier of the first conditional handover requirement may also be implicitly indicated. For example, an order of the first conditional handover requirement in the fifth information may serve as the identifier of the first conditional handover requirement.

In some embodiments, the first information may include one or more of following information in the first conditional handover requirement: the handover requirement for the terminal device accessing the first primary base station; whether the handover requirement for accessing the first secondary base station is included; the handover requirement for the terminal device accessing the first secondary base station; the first timer; and the identifier of the first conditional handover requirement. The information mentioned above is similar to the information included in the fifth information, and detailed explanations may refer to the explanations related to the fifth information above. The difference between the first information and the fifth information is that the fifth information is used for the source base station to configure candidate conditional handover requirements for the terminal device, while the first information is used for the terminal device to inform the target primary base station of conditional handover requirements selected by the terminal device.

In some embodiments, the first information may be explicitly or implicitly carried in the first message. The first message may include, for example, one or more of: a radio resource control (RRC) message, a media access control control element (MAC CE), uplink control information (UCI), and a physical uplink control channel (PUCCH). The RRC message may include one or more of: an RRC reconfiguration complete message, a UE assistance message, etc.

For example, the first information may be implicitly reported through random access resources. Exemplarily, the first information or the first conditional handover requirement may be associated with a first random access resource. When the terminal device accesses the first base station, it may use the first random access resource to perform the access procedure. The first base station may determine that the terminal device is executing the access procedure based on the first conditional handover requirement from the first random access resource. The first random access resource may be defined by one or more of the following dimensions: time, frequency, and orthogonal code. One or more candidate conditional handover requirements may be associated with corresponding random access resources. The association between the conditional handover requirements and the random access resources may be configured by the source base station.

For another example, the first information may be implicitly reported through a PRACH occasion (RO). Exemplarily, the first information or the first conditional handover requirement may be associated with a first RO. When the terminal device accesses the first base station, it may use the first RO to perform the access procedure. The first base station may determine that the terminal device is executing the access procedure based on the first conditional handover requirement from the first RO. One or more candidate conditional handover requirements may be associated with corresponding ROs. The first base station may divide the RO into several subsets, each corresponding to a conditional handover requirement, and notify the terminal device of a mapping relationship between the RO subsets and the conditional handover requirements.

As mentioned above, the first conditional handover requirement may belong to the one or more candidate conditional handover requirements. The terminal device may select one from the one or more candidate conditional handover requirements as the first conditional handover requirement and execute a corresponding behavior. The following describes how the terminal device selects the first conditional handover requirement from the one or more candidate conditional handover requirements.

In some embodiments, the first conditional handover requirement may be selected based on a priority. For example, the terminal device may select the one with the highest priority from the one or more candidate conditional handover requirements as the first conditional handover requirement.

In some implementations, the priority associated with the first conditional handover requirement may be determined based on one or more of: a time when the first conditional handover requirement is met; an order of the first conditional handover requirement among the one or more candidate conditional handover requirements; an indication of a base station (the second base station) corresponding to the source cell of the terminal device; data traffic carried by the first primary base station; and a signal quality requirement for the first primary base station as specified in the first conditional handover requirement.

Optionally, the terminal device may determine the priority associated with the first conditional handover requirement based on the time when the first conditional handover requirement is met. For example, the terminal device may select a conditional handover requirement that is met the earliest as the first conditional handover requirement. Exemplarily, if a plurality of candidate conditional handover requirements are met, the terminal device may select the one that is met the earliest for execution.

It should be noted that the satisfaction of the conditional handover requirement described in the present disclosure may refer to the satisfaction of part or all of the handover requirements within the conditional handover requirement. For example, taking the first conditional handover requirement including handover requirements for both the first primary base station and the first secondary base station as an example, the satisfaction of the first conditional handover requirement may include the handover requirement for the first primary base station being met, and/or the handover requirement for the first secondary base station being met.

Optionally, the terminal device may determine the priority associated with the first conditional handover requirement based on the order of the first conditional handover requirement among the one or more conditional handover requirements. The order of the first conditional handover requirement may be determined by the order of each conditional handover requirement or the conditional handover requirement list in the fifth information. It should be understood that the terminal device may determine the selected conditional handover requirement based on a forward or reverse order of the one or more candidate conditional handover requirements. For example, if a plurality of candidate conditional handover requirements are met, the one that appears earlier may be prioritized for selection. Taking the four conditions shown in FIG. 5 as an example, if the base station organizes the message corresponding to the fifth information in the order of "Condition 1 - Condition 3 - Condition 2 - Condition 4," the terminal device may determine, according to a forward order, the priority from high to low as: Condition 1 > Condition 3 > Condition 2 > Condition 4. For another example, if a plurality of candidate conditional handover requirements are met, the one that appears later may be prioritized for selection. Continuing to refer to FIG. 5, if the base station organizes the message corresponding to the fifth information in the order of "Condition 1 - Condition 3 - Condition 2 - Condition 4," the terminal device may determine, according to a reverse order, the priority from high to low in reverse order as: Condition 4 > Condition 2 > Condition 3 > Condition 1.

Optionally, the source base station of the terminal device may indicate the priority of the first conditional handover requirement. For example, the source base station may configure the priority of each conditional handover requirement when configuring the conditional handover. That is, the priority of the conditional handover requirement may be included in the fifth information. The priority may be represented by numbers, where the number representing the priority may range from 0 to 1. A larger number may indicate a higher or lower priority.

Optionally, the terminal device may determine the priority associated with the first conditional handover requirement based on the data traffic carried by the first primary base station. In other words, the terminal device may select a conditional handover requirement for execution based on the data traffic carried by the primary base station corresponding to the conditional handover requirement.

For example, if a plurality of candidate conditional handover requirements are met, the terminal device may choose to execute a conditional handover requirement with the least data traffic carried by the primary base station. Continuing with FIG. 5 as an example, if the service of the terminal device requires a transmission rate of 100 Mbps, under Condition 1, the primary base station carries 50 Mbps and the secondary base station A carries 50 Mbps; under Condition 2, the primary base station carries 30 Mbps and the secondary base station carries 70 Mbps. In this case, the terminal device may choose Condition 2.

For another example, if a plurality of candidate conditional handover requirements are met, the terminal device may choose to execute a conditional handover requirement with the most data traffic carried by the primary base station. Continuing with FIG. 5 as an example, if the service of the terminal device requires a transmission rate of 100 Mbps, under Condition 1, the primary base station carries 50 Mbps and the secondary base station A carries 50 Mbps; under Condition 2, the primary base station carries 30 Mbps and the secondary base station carries 70 Mbps. In this case, the terminal device may choose Condition 1.

Optionally, the terminal device may determine the priority associated with the first conditional handover requirement based on the signal quality requirement for the first primary base station (e.g., the first signal quality threshold mentioned above) as specified in the first conditional handover requirement. In other words, the terminal device may select the conditional handover requirement for execution based on the signal quality requirement for the primary base station corresponding to the conditional handover requirement. It should be noted that when the conditional handover requirement includes requirements for both the primary base station and the secondary base station, the priority may be determined based on this scheme. That is, this scheme does not apply to conditional handover requirements that involve "only one base station" (e.g., Condition 4 shown in FIG. 5).

For example, if a plurality of candidate conditional handover requirements are met, the terminal device may choose to execute the conditional handover requirement with the highest signal quality requirement for the primary base station. Continuing with FIG. 5 as an example, if Condition 1 requires the signal strength RSRP of the primary base station to be greater than -80 dBm and the signal strength RSRP of secondary base station A to be greater than -65 dBm, and Condition 2 requires the signal strength RSRP of the primary base station to be greater than -70 dBm and the signal strength RSRP of secondary base station B to be greater than -65 dBm, the terminal device may choose Condition 2 if both conditions are met.

Optionally, a priority associated with a conditional handover requirement that includes a plurality of target base stations may be higher than a priority associated with a conditional handover requirement that includes only one target base station. For example, if there is a conditional handover requirement including "primary base station + secondary base station" that is met, the terminal device may not select the conditional handover requirement that includes "only one base station."

Optionally, the source base station may configure the terminal device to select the conditional handover requirement according to a first rule. That is, the source base station may configure the priority corresponding to the first conditional handover requirement.

Optionally, if a plurality of candidate conditional handover requirements are met, the terminal device may arbitrarily select one conditional handover requirement for execution.

In some embodiments, the terminal device may send third information to the first base station. The third information may indicate one or more of: a handover condition of the first secondary base station have not been met after the terminal device establishes the connection with the first base station; a handover condition of the first secondary base station have not been met after successfully accessing the first base station; the terminal device failing to attempt to access the first secondary base station; and the terminal device stopping monitoring or attempting to access the first secondary base station.

For example, if the first conditional handover requirement includes the handover requirement for the first secondary base station, and the handover requirement for the first secondary base station is still not met within the first duration after triggering access to the first base station, the terminal device may send the third information. The first duration may be, for example, the duration of the first timer. In other words, if the first timer expires and the handover requirement for the first secondary base station is still not met, the terminal device may report the third information to inform the first base station of this situation. The third information reported by the terminal device may include one or more of: "first secondary base station access failed," "first timer expiring."

For another example, if the first conditional handover requirement includes the handover requirement for the first secondary base station, and the handover requirement for the first secondary base station is met, the terminal device may attempt to access the first secondary base station. In the case that the terminal device fails to attempt to access the first secondary base station, the terminal device may report the third information to inform the first base station of this situation. Alternatively, in a case that the number of failed attempts to access the first secondary base station by the terminal device is greater than or equal to a first threshold, the terminal device may report the third information to inform the first base station of this situation. The third information reported by the terminal device may include one or both of: "first secondary base station access failed," and "the number of failures to access the first secondary base station has reached the first threshold."

The third information may be carried in one or more of: the RRC message, the MAC CE, etc.

In some embodiments, in response to occurrence of the first event, the terminal device stops monitoring or attempting to access the first secondary base station. The first event may include one or more: the first timer expiring; the terminal device receiving the fourth information sent by the first base station, where the fourth information is used to reconfigure the secondary base station; and the number of times that the terminal device attempts to access the first secondary base station being greater than or equal to the first threshold.

In some embodiments, in response to the occurrence of the first event, the terminal device stops the first timer.

For example, if the terminal device receives the fourth information sent by the first base station during the operation of the timer, the terminal device may execute according to the fourth information. In this case, the terminal device may also stop the first timer and/or stop monitoring the first secondary base station. If the terminal device is attempting to access the first secondary base station when it receives the fourth information from the first base station, the terminal device may stop random access or not stop random access. If the terminal device stops random access, it may execute the access for the reconfigured secondary base station according to the fourth information sent by the first base station. If the terminal device does not stop random access, it may ignore the fourth information sent by the first base station, or the terminal device may execute the access for the reconfigured secondary base station according to the fourth information sent by the first base station in the case of a failure in random access to the first secondary base station.

The method embodiments of the present disclosure are described in detail above, and the apparatus embodiments of the present disclosure are described in detail below. It should be understood that descriptions of the method embodiments correspond to descriptions of the apparatus embodiments, and therefore, reference may be made to the foregoing method embodiments for parts that are not described in detail.

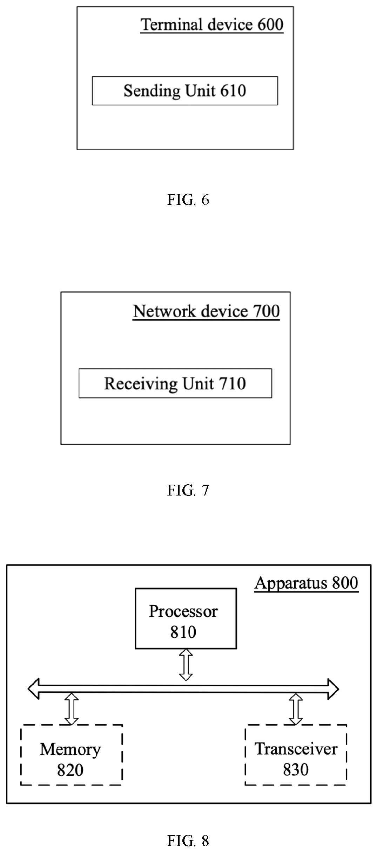

FIG. 6 is a schematic structural diagram of a terminal device 600 according to an embodiment of the present disclosure. The terminal device 600 may include a sending unit 610.

The sending unit 610 is configured to send first information to a first base station after the terminal device establishes a connection with the first base station. The connection is established based on a first conditional handover requirement, the first base station is a first primary base station associated with the first conditional handover requirement, and the first information is used to indicate one or more of: whether the terminal device accesses a secondary base station; cell information of a first secondary base station accessed by the terminal device in a case that the terminal device accesses the secondary base station; and the terminal device accessing the first secondary base station within a first duration in the case that the terminal device accesses the secondary base station.

In some embodiments, the sending unit 610 is configured to send second information to the first base station. The second information is used to indicate the first conditional handover requirement, and the first conditional handover requirement is used to indicate the first information.

In some embodiments, the second information includes one or more of following information of the first conditional handover requirement: a handover requirement for the terminal device accessing the first primary base station; whether a handover requirement for accessing the first secondary base station; a handover requirement for the terminal device accessing the first secondary base station; a first timer, where the first timer is related to a time when the terminal device monitors the first secondary base station; and an identifier of the first conditional handover requirement.

In some embodiments, in a case that the first conditional handover requirement includes the handover requirement for accessing the first secondary base station, the second information is further used to indicate whether the handover requirement for accessing the first secondary base station is met.

In some embodiments, the sending unit 610 is configured to establish the connection using a first random access resource. The first information is associated with the first random access resource.

In some embodiments, the first information is carried in one or more of: an RRC message, a MAC CE, UCI, and a PUCCH.

In some embodiments, the first conditional handover requirement belongs to one or more candidate conditional handover requirements, and the first conditional handover requirement is selected from the one or more candidate conditional handover requirements based on a priority.

In some embodiments, the priority is determined based on one or more of: a time when the first conditional handover requirement is met; an order of the first conditional handover requirement in the one or more candidate conditional handover requirements; an indication of a base station corresponding to a source cell of the terminal device; data traffic carried by the first primary base station; and a signal quality requirement for the first primary base station as specified in the first conditional handover requirement.

In some embodiments, the terminal device 600 is further configured to send third information to the first base station. The third information is used to indicate one or more of: a handover condition of the first secondary base station being still not met after the terminal device establishes the connection with the first base station; the terminal device failing to attempt to access the first secondary base station; and the terminal device stopping monitoring or attempting to access the first secondary base station.

In some embodiments, the terminal device 600 is further configured to stop monitoring or attempting to access the first secondary base station in response to occurrence of a first event. The first event includes one or more of: a first timer expiring, where the first timer is related to a time when the terminal device monitors the first secondary base station; the terminal device receiving fourth information sent by the first base station, where the fourth information is used to reconfigure the secondary base station; and a number of times that the terminal device attempts to access the first secondary base station being greater than or equal to a first threshold.

In optional embodiments, the sending unit 610 may be a transceiver 830. The terminal device 600 may further include a processor 810 and a memory 820, as specifically shown in FIG. 8.

FIG. 7 is a schematic structural diagram of a network device 700 according to an embodiment of the present disclosure. The network device 700 may be a first base station. The network device 700 includes a receiving unit 710.

The receiving unit 710 is configured to receive first information sent by a terminal device after the terminal device establishes a connection with the first base station. The connection is established based on a first conditional handover requirement, the first base station is a first primary base station associated with the first conditional handover requirement, and the first information is used to indicate one or more of: whether the terminal device accesses a secondary base station; cell information of a first secondary base station accessed by the terminal device in a case that the terminal device accesses the secondary base station; and the terminal device accessing the first secondary base station within a first duration in the case that the terminal device accessing the secondary base station.

In some embodiments, the receiving unit 710 is configured to receive second information sent by the terminal device. The second information is used to indicate the first conditional handover requirement, and the first conditional handover requirement is used to indicate the first information.

In some embodiments, the second information includes one or more of following information of the first conditional handover requirement: a handover requirement for the terminal device accessing the first primary base station; whether a handover requirement for accessing the first secondary base station is included; a handover requirement for the terminal device accessing the first secondary base station; a first timer, where the first timer is related to a time when the terminal device monitors the first secondary base station; and an identifier of the first conditional handover requirement.

In some embodiments, in a case that the first conditional handover requirement includes the handover requirement for accessing the first secondary base station, the second information is further used to indicate whether the handover requirement for accessing the first secondary base station is met.

In some embodiments, the receiving unit 710 is configured to detect a first random access resource used by the terminal device to establish the connection. The first information is associated with the first random access resource.

In some embodiments, the first information is carried in one or more of: a RRC message, a MAC CE, UCI, and a PUCCH.

In some embodiments, the first conditional handover requirement belongs to one or more candidate conditional handover requirements, and the first conditional handover requirement is selected from the one or more candidate conditional handover requirements based on a priority.

In some embodiments, the priority is determined based on one or more of: a time when the first conditional handover requirement is met; an order of the first conditional handover requirement in the one or more candidate conditional handover requirements; an indication of a base station corresponding to a source cell of the terminal device; data traffic carried by the first primary base station; and a signal quality requirement for the first primary base station as specified in the first conditional handover requirement.

In some embodiments, the network device 700 is further configured to receive third information sent by the terminal device. The third information is used to indicate one or more of: a handover condition of the first secondary base station being still not met after the terminal device establishes the connection with the first base station; the terminal device failing to attempt to access the first secondary base station; and the terminal device stopping monitoring or attempting to access the first secondary base station.

In optional embodiments, the receiving unit 710 may be a transceiver 830. The network device 700 may further include a processor 810 and a memory 820, as specifically shown in FIG. 8.

FIG. 8 is a schematic structural diagram of an apparatus for communication according to an embodiment of the present disclosure. The dashed line in FIG. 8 indicates that the unit or module is optional. The apparatus 800 may be configured to implement the method described in the foregoing method embodiments. The apparatus 800 may be one or more of a chip, a terminal device, or a network device.

The apparatus 800 may include one or more processors 810, and the processor 810 may support the apparatus 800 to implement the method described in the foregoing method embodiments. The processor 810 may be a general-purpose processor or a dedicated processor. For example, the processor may be a central processing unit (CPU). Alternatively, the processor may be another general-purpose processor, a digital signal processor (DSP), an application specific integrated circuit (ASIC), a field programmable gate array (FPGA) or other programmable logic devices, a discrete gate or transistor logic device, a discrete hardware component, or the like. The general-purpose processor may be a microprocessor, or the processor may be any conventional processor or the like.

The apparatus 800 may further include one or more memories 820 storing a program, and the program may be executed by the processor 810 to cause the processor 810 to perform the method described in the foregoing method embodiments. The memory 820 may be independent of the processor 810 or may be integrated into the processor 810.

The apparatus 800 may further include a transceiver 830, and the processor 810 may communicate with another device or chip via the transceiver 830. For example, the processor 810 may perform data transmission/reception with another device or chip via the transceiver 830.

Embodiments of the present disclosure further provide a computer-readable storage medium, configured to store a program. The computer-readable storage medium may be applied to the terminal or network device provided in the embodiments of the present disclosure, and the program causes the computer to perform the method performed by the terminal or network device in the embodiments of the present disclosure.

Embodiments of the present disclosure further provide a computer program product. The computer program product includes a program. The computer program product may be applied to the terminal or network device provided in the embodiments of the present disclosure, and the program causes the computer to perform the method performed by the terminal or network device in the embodiments of the present disclosure.

Embodiments of the present disclosure further provide a computer program. The computer program may be applied to the terminal or network device provided in the embodiments of the present disclosure, and the computer program causes the computer to perform the method performed by the terminal or network device in the embodiments of the present disclosure.

It should be understood that the terms "system" and "network" in the present disclosure may be used interchangeably. In addition, the terms used in the present disclosure are merely used to explain specific embodiments of the present disclosure, and are not intended to limit the present disclosure. In the description, claims, and accompanying drawings of the present disclosure, the terms "first", "second", "third", "fourth", and the like are used to distinguish different objects rather than describe a specific order. In addition, the terms "including" and "having" and any variations thereof are intended to cover non-exclusive inclusion.

It should be understood that the term "indication" mentioned in the embodiments of the present disclosure may be a direct indication, or may be an indirect indication, or may indicate that there is an association relationship. For example, A indicates B, which may indicate that A directly indicates B, e.g., B is obtained through A, or may indicate that A indirectly indicates B, e.g., A indicates C and B is obtained through C, or may indicate that A and B have an association relationship.

In the embodiments of the present disclosure, "B corresponding to A" indicates that B is associated with A, and B may be determined based on A. However, it should be further understood that, determining B based on A does not mean that B is determined only based on A, or B may also be determined based on A and/or other information.

In the embodiments of the present disclosure, the term "corresponding" may indicate that there is a direct correspondence or indirect correspondence between the two, or may indicate that there is an association relationship between the two, or may be relationships such as indicating and being indicated, configuring and being configured, etc.

It should be understood that the terms "predefined" and "preconfigured" may be implemented by pre-storing a corresponding code, a table, or another manner that can be used to indicate related information in a device (e.g., a terminal device and a network device), and a specific implementation is not limited in the present disclosure. For example, the predefined may indicate being defined in a protocol.

It should be understood that the term "protocol" in the embodiments of the present disclosure may refer to a standard protocol in the field of communications, such as an LTE protocol, an NR protocol, and related protocols applied to a future communications system, which is not limited in the present disclosure.

The term "and/or" in the embodiments of the present disclosure is merely an association relationship for describing associated objects, indicating that there are three relationships, e.g., A and/or B may indicate that A exists alone, A and B exist at the same time, and B exists alone. In addition, the character "/" in this specification generally indicates an "or" relationship between the associated objects.

In the embodiments of the present disclosure, the term "including" may refer to directly including or may be indirectly including. Optionally, the "including" mentioned in the embodiments of the present disclosure may be replaced with "indicating" or "used for determining". For example, A includes B, may be replaced with A indicates B, or A is used to determine B.

It should be understood that in various embodiments of the present disclosure, a size of a sequence number of each process does not mean an execution sequence, and the execution sequence of each process should be determined by its function and internal logic but should not constitute any limitation on an implementation process of the embodiments of the present disclosure.

In the several embodiments provided in the present disclosure, it should be understood that the disclosed system, apparatus, and method may be implemented in other manners. For example, the apparatus embodiments described above are merely illustrative, and the division of the units is merely a logical function division. In actual implementation, there may be alternative division manners, such as combining a plurality of units or components or integrating them into another system, or ignoring or not executing some features. In addition, the shown or discussed mutual coupling or direct coupling or communication connection may be indirect coupling or communication connection through some interfaces, devices, or units, which may be electrical, mechanical, or in other forms.

The units described as separate parts may or may not be physically separate, and parts shown as units may or may not be physical units, i.e., may be located in one position, or may be distributed on a plurality of network units. Some or all of the units may be selected according to actual needs to achieve the objectives of the solutions of the embodiments.

In addition, functional units in the embodiments of the present disclosure may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of the present disclosure are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium, for example, the computer instructions may be transmitted from a website, a computer, a server, or a data center to another website, computer, server, or data center in a wired (e.g., a coaxial cable, an optical fiber, a digital subscriber line (DSL)) or a wireless (e.g., infrared, wireless, microwave, etc.) manner. The computer-readable storage medium may be any usable medium readable by a computer, or a data storage device, such as a server or a data center including one or more integrated usable media. The usable medium may be a magnetic medium (e.g., a floppy disk, a hard disk, or a magnetic tape), an optical medium (e.g., a digital video disk (DVD)), a semiconductor medium (e.g., a solid state disk (SSD)), or the like.

The foregoing descriptions are merely specific implementations of the present disclosure, but the protection scope of the present disclosure is not limited thereto, and any changes or substitutions may be easily conceived of by a person skilled in the art within the technical scope disclosed in the present disclosure. Therefore, the protection scope of the present disclosure shall be subject to the protection scope of the claims.

## Claims

1. A method for wireless communication, comprising:
sending, by a terminal device, first information to a first base station after the terminal device establishes a connection with the first base station;
wherein the connection is established based on a first conditional handover requirement, the first base station is a first primary base station associated with the first conditional handover requirement, and the first information is used to indicate one or more of:
whether the terminal device accesses a secondary base station;
cell information of a first secondary base station accessed by the terminal device in a case that the terminal device accesses the secondary base station; and
the terminal device accessing the first secondary base station within a first duration in the case that the terminal device accesses the secondary base station.

2. The method according to claim 1, wherein the sending, by the terminal device, the first information to the first base station includes:
sending, by the terminal device, second information to the first base station;
wherein the second information is used to indicate the first conditional handover requirement, and the first conditional handover requirement is used to indicate the first information.

3. The method according to claim 2, wherein the second information includes one or more of following information of the first conditional handover requirement:
a handover requirement for the terminal device accessing the first primary based station;
whether a handover requirement for accessing the first secondary base station is included;
a handover requirement for the terminal device accessing the first secondary base station;
a first timer, wherein the first timer is related to a time when the terminal device monitors the first secondary base station; and
an identifier of the first conditional handover requirement.

4. The method according to claim 3, wherein in a case that the first conditional handover requirement includes the handover requirement for accessing the first secondary base station, the second information is further used to indicate whether the handover requirement for accessing the first secondary base station is met.

5. The method according to any one of claims 1 to 4, wherein the sending, by the terminal device, the first information to the first base station includes:
establishing, by the terminal device, the connection using a first random access resource;
wherein the first information is associated with the first random access resource.

6. The method according to any one of claims 1 to 5, wherein the first information is carried in one or more of: a radio resource control, RRC, message, a media access control control element, MAC CE, uplink control information, UCI, and a physical uplink control channel, PUCCH.

7. The method according to any one of claims 1 to 6, wherein the first conditional handover requirement belongs to one or more candidate conditional handover requirements, and the first conditional handover requirement is selected from the one or more candidate conditional handover requirements based on a priority.

8. The method according to claim 7, wherein the priority is determined according to one or more of:
a time when the first conditional handover requirement is met;
an order of the first conditional handover requirement in the one or more candidate conditional handover requirements;
an indication of a base station corresponding to a source cell of the terminal device;
data traffic carried by the first primary based station; and
a signal quality requirement for the first primary based station as specified in the first conditional handover requirement.

9. The method according to any one of claims 1 to 8, further comprising:
sending, by the terminal device, third information to the first base station;
wherein the third information is used to indicate one or more of:
a handover condition of the first secondary base station being still not met after the terminal device establishes the connection with the first base station;
the terminal device failing to attempt to access the first secondary base station; and
the terminal device stopping monitoring or attempting to access the first secondary base station.

10. The method according to any one of claims 1 to 9, further comprising:
stopping, by the terminal device, monitoring or attempting to access the first secondary base station in response to occurrence of a first event;
wherein the first event includes one or more of:
a first timer expiring, wherein the first timer is related to a time when the terminal device monitors the first secondary base station;
the terminal device receiving fourth information sent by the first base station, wherein the fourth information is used to reconfigure the secondary base station; and
a number of times that the terminal device attempts to access the first secondary base station being greater than or equal to a first threshold.

11. A method for wireless communication, comprising:
receiving, by a first base station, first information sent by a terminal device after the terminal device establishes a connection with the first base station;
wherein the connection is established based on a first conditional handover requirement, the first base station is a first primary based station associated with the first conditional handover requirement, and the first information is used to indicate one or more of:
whether the terminal device accesses a secondary base station;
cell information of a first secondary base station accessed by the terminal device in a case that the terminal device accesses the secondary base station; and
the terminal device accessing the first secondary base station within a first duration in the case that the terminal device accessing the secondary base station.

12. The method according to claim 11, wherein the terminal device sending the first information to the first base station includes:
sending, by the terminal device, second information to the first base station;
wherein the second information is used to indicate the first conditional handover requirement, and the first conditional handover requirement is used to indicate the first information.

13. The method according to claim 12, wherein the second information includes one or more of following information of the first conditional handover requirement:
a handover requirement for the terminal device accessing the first primary based station;
whether a handover requirement for accessing the first secondary base station is included;
a handover requirement for the terminal device accessing the first secondary base station;
a first timer, wherein the first timer is related to a time when the terminal device monitors the first secondary base station; and
an identifier of the first conditional handover requirement.

14. The method according to claim 13, wherein in a case that the first conditional handover requirement includes the handover requirement for accessing the first secondary base station, the second information is further used to indicate whether the handover requirement for accessing the first secondary base station is met.

15. The method according to any one of claims 11 to 14, wherein the receiving, by the first base station, the first information sent by the terminal device includes:
detecting, by the first base station, a first random access resource used by the terminal device to establish the connection;
wherein the first information is associated with the first random access resource.

16. The method according to any one of claims 11 to 15, wherein the first information is carried in one or more of: a radio resource control, RRC, message, a media access control control element, MAC CE, uplink control information, UCI, and a physical uplink control channel, PUCCH.

17. The method according to any one of claims 11 to 16, wherein the first conditional handover requirement belongs to one or more candidate conditional handover requirements, and the first conditional handover requirement is selected from the one or more candidate conditional handover requirements based on a priority.

18. The method according to claim 17, wherein the priority is determined according to one or more of:
a time when the first conditional handover requirement is met;
an order of the first conditional handover requirement in one or more candidate conditional handover requirements;
an indication of a base station corresponding to a source cell of the terminal device;
data traffic carried by the first primary based station; and
a signal quality requirement for the first primary based station as specified in the first conditional handover requirement.

19. The method according to any one of claims 11 to 18, further comprising:
receiving, by the first base station, third information sent by the terminal device;
wherein the third information is used to indicate one or more of:
a handover condition of the first secondary base station being still not met after the terminal device establishes the connection with the first base station;
the terminal device failing to attempt to access the first secondary base station ; and
the terminal device stopping monitoring or attempting to access the first secondary base station.

20. A terminal device, comprising:
a sending unit, configured to send first information to a first base station after the terminal device establishes a connection with the first base station;
wherein the connection is established based on a first conditional handover requirement, the first base station is a first primary based station associated with the first conditional handover requirement, and the first information is used to indicate one or more of:
whether the terminal device accesses a secondary base station;
cell information of a first secondary base station accessed by the terminal device in a case that the terminal device accesses the secondary base station; and
the terminal device accessing the first secondary base station within a first duration in the case that the terminal device accesses the secondary base station.

21. The terminal device according to claim 20, wherein the sending unit is configured to:
send second information to the first base station;
wherein the second information is used to indicate the first conditional handover requirement, and the first conditional handover requirement is used to indicate the first information.

22. The terminal device according to claim 21, wherein the second information includes one or more of following information of the first conditional handover requirement:
a handover requirement for the terminal device accessing the first primary based station;
whether a handover requirement for accessing the first secondary base station is included;
a handover requirement for the terminal device accessing the first secondary base station;
a first timer, wherein the first timer is related to a time when the terminal device monitors the first secondary base station; and
an identifier of the first conditional handover requirement.

23. The terminal device according to claim 22, wherein in a case that the first conditional handover requirement includes the handover requirement for accessing the first secondary base station, the second information is further used to indicate whether the handover requirement for accessing the first secondary base station is met.

24. The terminal device according to any one of claims 20 to 23, wherein the sending unit is configured to:
establish the connection using a first random access resource;
wherein the first information is associated with the first random access resource.

25. The terminal device according to any one of claims 20 to 24, wherein the first information is carried in one or more of: a radio resource control, RRC, message, a media access control control element, MAC CE, uplink control information, UCI, and a physical uplink control channel, PUCCH.

26. The terminal device according to any one of claims 20 to 25, wherein the first conditional handover requirement belongs to one or more candidate conditional handover requirements, and the first conditional handover requirement is selected from the one or more conditional handover requirements based on a priority.

27. The terminal device according to claim 26, wherein the priority is determined according to one or more of:
a time when the first conditional handover requirement is met;
an order of the first conditional handover requirement in the one or more candidate conditional handover requirements;
an indication of a base station corresponding to a source cell of the terminal device;
data traffic carried by the first primary based station; and
a signal quality requirement for the first primary based station as specified in the first conditional handover requirement.

28. The terminal device according to any one of claims 20 to 27, wherein the terminal device is further configured to:
send third information to the first base station;
wherein the third information is used to indicate one or more of:
a handover condition of the first secondary base station being still not met after the terminal device establishes the connection with the first base station;
the terminal device failing to attempt to access the first secondary base station; and
the terminal device stopping monitoring or attempting to access the first secondary base station.

29. The terminal device according to any one of claims 20 to 28, wherein the terminal device is further configured to:
stop monitoring or attempting to access the first secondary base station in response to occurrence of a first event;
wherein the first event includes one or more of:
a first timer expiring, wherein the first timer is related to a time when the terminal device monitors the first secondary base station;
the terminal device receiving fourth information sent by the first base station, wherein the fourth information is used to reconfigure the secondary base station; and
a number of times that the terminal device attempts to access the first secondary base station being greater than or equal to a first threshold.

30. A network device, wherein the network device is a first base station and comprises:
a receiving unit, configured to receive first information sent by a terminal device after the terminal device establishes a connection with the first base station;
wherein the connection is established based on a first conditional handover requirement, the first base station is a first primary based station associated with the first conditional handover requirement, and the first information is used to indicate one or more of:
whether the terminal device accesses a secondary base station;
cell information of a first secondary base station accessed by the terminal device in a case that the terminal device accesses the secondary base station; and
the terminal device accessing the first secondary base station within a first duration in the case that the terminal device accessing the secondary base station.

31. The network device according to claim 30, wherein the receiving unit is configured to:
receive second information sent by the terminal device;
wherein the second information is used to indicate the first conditional handover requirement, and the first conditional handover requirement is used to indicate the first information.

32. The network device according to claim 31, wherein the second information includes one or more of following information of the first conditional handover requirement:
a handover requirement for the terminal device accessing the first primary based station;
whether a handover requirement for accessing the first secondary base station is included;
a handover requirement for the terminal device accessing the first secondary base station;
a first timer, wherein the first timer is related to a time when the terminal device monitors the first secondary base station; and
an identifier of the first conditional handover requirement.

33. The network device according to claim 32, wherein in a case that the first conditional handover requirement includes the handover requirement for accessing the first secondary base station, the second information is further used to indicate whether the handover requirement for accessing the first secondary base station is met.

34. The network device according to any one of claims 30 to 33, wherein the receiving unit is configured to:
detect a first random access resource used by the terminal device to establish the connection;
wherein the first information is associated with the first random access resource.

35. The network device according to any one of claims 30 to 34, wherein the first information is carried in one or more of: a radio resource control, RRC, message, a media access control control element, MAC CE, uplink control information, UCI, and a physical uplink control channel, PUCCH.

36. The network device according to any one of claims 30 to 35, wherein the first conditional handover requirement belongs to one or more candidate conditional handover requirements, and the first conditional handover requirement is selected from the one or more candidate conditional handover requirements based on a priority.

37. The network device according to claim 36, wherein the priority is determined according to one or more of:
a time when the first conditional handover requirement is met;
an order of the first conditional handover requirement in the one or more candidate conditional handover requirements;
an indication of a base station corresponding to a source cell of the terminal device;
data traffic carried by the first primary based station; and
a signal quality requirement for the first primary based station as specified in the first conditional handover requirement.

38. The network device according to any one of claims 30 to 37, wherein the network device is further configured to:
receive third information sent by the terminal device;
wherein the third information is used to indicate one or more of:
a handover condition of the first secondary base station being still not met after the terminal device establishes the connection with the first base station;
the terminal device failing to attempt to access the first secondary base station; and
the terminal device stopping monitoring or attempting to access the first secondary base station.

39. A terminal device, comprising a memory and a processor, wherein the memory is configured to store a program, and the processor is configured to invoke the program in the memory to cause the terminal device to perform the method according to any one of claims 1 to 10.

40. A network device, comprising a memory and a processor, wherein the memory is configured to store a program, and the processor is configured to invoke the program in the memory to cause the network device to perform the method according to any one of claims 11 to 19.

41. An apparatus, comprising a processor, wherein the processor is configured to invoke a program from a memory to cause the apparatus to perform the method according to any one of claims 1 to 19.

42. A chip, comprising a processor, wherein the processor is configured to invoke a program from a memory to cause a device installed with the chip to perform the method according to any one of claims 1 to 19.

43. A computer-readable storage medium storing a program, wherein the program causes a computer to perform the method according to any one of claims 1 to 19.

44. A computer program product, comprising a program, wherein the program causes a computer to perform the method according to any one of claims 1 to 19.

45. A computer program, wherein the computer program causes a computer to perform the method according to any one of claims 1 to 19.
